# EUROPÄISCHE PATENTANMELDUNG

(11) **EP 0 641 927 A1**
(43) Veröffentlichungstag der Anmeldung: **08.03.1995**
(21) Anmeldenummer: 94113167.4
(22) Anmeldetag: 24.08.1994
(51) Int. Cl.: F02F 3/26

(54) **Motorkolben mit einer Brennraummulde, Verfahren zu dessen Herstellung und Motor mit Kolben**

(30) Priorität: 03.09.1993 US 116189
(71) Anmelder: DEERE & COMPANY, Moline, Illinois 61265 (US)
(72) Erfinder: Tracy, Paul, Hudson, Iowa 50643 (US)
(74) Vertreter: Feldmann, Bernhard

(57) **Zusammenfassung**

Es wird ein Kolben (10) für Verbrennungskraftmaschinen beschrieben, dessen Kolbenkörper einen Kolbenboden (20), eine darin eingelassene Brennraummulde (14) und eine Bolzenbohrung (12), die in den Kolbenkörper unterhalb der Brennraummulde (14) ausgebildet ist, enthält. Die Brennraummulde (14) ist durch eine Lippe (16) begrenzt, die als Übergang zwischen der Brennraummmulde (14) und dem Kolbenboden (20) dient. Um die Rißanfälligkeit des Kolbens (10) zu verringern, wird vorgeschlagen, daß die Lippe (16) rund um den Umfang der Brennraummulde (14) unterschiedliche Radien an unterschiedlichen vorbestimmbaren Stellen aufweist. Dabei sollen die Radien der Lippe (16) in einem Abschnitt (26, 34), der über wenigstens dem zentralen Teil der Bolzenbohrung (12) liegt, weniger scharf ausgebildet sein, als in den anderen Abschnitten (22, 30, 24, 28, 32, 36) der Lippe. Es werden ferner ein Herstellungsverfahren für derartige Kolben (10) sowie ein Motor mit einem derartigen Kolben (10) angegeben.

## Beschreibung

Die Erfindung bezieht sich auf Kolben für Verbrennungskraftmaschinen, und insbesondere auf die Form der Lippe der Brennraummulde derartiger Kolben gemäß dem Oberbegriff des Patentanspruchs 1. Sie bezieht sich ferner auf Verbrennungskraftmaschinen mit einem derartigen Kolben und auf ein Herstellungsverfahren für diese Kolben.

Zukünftige Emissionsvorschriften erfordern für Verbrennungskraftmaschinen eine erhebliche Verringerung der Emission von Kohlenwasserstoffverbindungen und NOₓ. Es ist in der Industrie seit langem bekannt, daß, indem die Brennraummuldenlippe (d. h. der Rand der Brennraummulde) scharfkantig oder so scharfkantig wie möglich gemacht wird, sich solche Emissionen verringern lassen. Unglücklicherweise gilt, daß je schärfer die Lippe ist, desto höher ist auch die mechanische Spannung in der Lippe, so daß hier tatsächlich noch keine befriedigende Technik zur Emissionsverbesserung zu sehen ist.

Derartige Spannungen stellen insbesondere ein Problem in dem Bereich der Brennraummuldenlippe dar, der unmittelbar oberhalb der Kolbenbolzenbohrung liegt. Der Kolben ist dort am dünnsten, und die Spannung, die durch eine kleine Lippe mit einem Nominalradius von z. B. weniger als 1 mm verursacht wird, ist größer als der Kolben widerstehen kann. Er reißt gewöhnlich nach einem mäßigen Benutzungsumfang ein, was zu katastrophalen Fehlern führt.

Eine mögliche Lösung könnte darin liegen, den Kolben aus einem Material anzufertigen, das einem höheren Spannungsgrad widersteht als das konventionell verwendete Material. In großen Maschinen werden die Kolben gewöhnlich aus Aluminiumguß gefertigt, um die Masse zu reduzieren. Faserverstärkter Preßguß und eisenhaltige einteilige Kolben oder Gelenkkolben würden erheblich fester ausfallen. Unglücklicherweise sind sie jedoch auch erheblich teurer und schwerer.

Die der Erfindung zugrunde liegende Aufgabe wird darin gesehen, einen Kolben mit einer scharfkantigen Brennraummulde anzugeben, die bei normalen oberhalb der Kolbenbolzenbohrung auftretenden Spannungen nicht reißt oder bricht, bzw. bei der die Rißanfälligkeit verringert ist.

Die Aufgabe wird ausgehend von dem Oberbegriff des Patentanspruches 1 durch dessen kennzeichnende Merkmale gelöst. Weitere vorteilhafte Ausgestaltungen und Weiterbildungen der Erfindung gehen aus den Unteransprüchen und weiteren Hauptansprüchen hervor.

Das Wesen der Erfindung liegt darin, daß verschiedene Bereiche der Muldenlippe unterschiedliche Radien aufweisen. Der größte Teil der Lippe ist scharfkantig, oder nahezu scharfkantig, z. B. mit 0,75 mm Nominalradius. Die Abschnitte, die unmittelbar oberhalb der Bolzenbohrung liegen, sind jedoch mit einer etwas weniger scharfkantigen Lippe versehen, die z. B. einen Nominalradius von 1,5 mm aufweisen. Die Lippe hat einen weichen Übergang zwischen den beiden Radien. Ein abrupter Übergang sollte vermieden werden, da hierdurch ein Lippenabschnitt mit noch höheren Spannungen entstehen würde, als sie für die ursprüngliche Lippe gegeben wären.

Die scharfen oder nahezu scharfen Radien rund um die Brennraummulde können optimiert werden, um eine optimale Emissionsverringerung sowie eine erhöhte thermische Rißfestigkeit zu erhalten. Die weniger scharfen Abschnitte der Lippe sollten so kleine Radien und so kleine Bogenlängen wie möglich aufweisen, um ihren beeinträchtigenden Einfluß auf die Emissionsqualität zu minimieren. Ferner sollte bei einer Maschine mit zwei Ventilen pro Zylinder die weniger scharfen Abschnitte der Lippe normalerweise unter den Ventilen in dem Zylinderkopf positioniert werden. Die Ventile sind gewöhnlich in die Bodenfläche des Zylinderkopfes eingelassen, so daß zwischen dem Kolbenboden und dem Ventil unabhängig von der Schärfe der Lippe ein Zwischenraum ausgebildet ist. Hieraus folgt, daß der Einfluß auf die Emission minimiert wird, wenn die Abschnitte der Lippe mit verminderter Schärfe unter den Ventilen liegen.

Der Kolben kann auf beliebige Weise hergestellt werden. Eine bevorzugte Art wird jedoch darin gesehen, zunächst den Kolben zu gießen und spanabhebend zu bearbeiten, so daß eine Brennraummulde entsteht, die eine scharfe oder nahezu scharfe Lippe entlang ihren ganzen Umfang aufweist. Die Lippe kann dann in den Abschnitten oberhalb der Kolbenbohrung gebürstet werden, um die Lippe stumpf zu machen und um einen weichen Übergang zwischen den scharfen Abschnitten der Lippe und den stumpfen oder weniger scharfen Abschnitten der Lippe zu gewinnen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Aufsicht eines erfindungsgemäßen Kolbens,
- Fig. 2: eine Schnittdarstellung des Kolbens gemäß Fig. 1 und
- Fig. 3 und 4: vergrößerte Querschnittsteilansichten der Brennraummuldenlippe des Kolbens der Fig. 1.

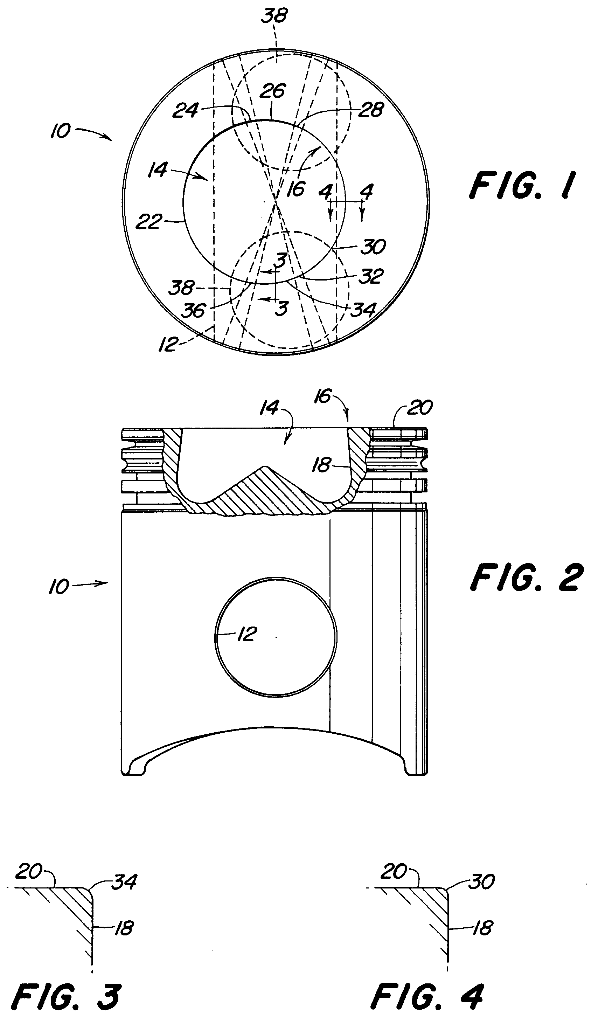

Die Figuren 1 und 2 illustrieren einen Kolben 10 gemäß vorliegender Erfindung. In den Kolben 10 ist eine Kolbenbolzenbohrung 12 eingelassen, in die ein nicht dargestellter Bolzen eingefügt werden kann, um den Kolben 10 auf übliche Weise mit einer nicht dargestellten Kolbenstange zu verbinden. Der Kolben 10 weist ferner eine in seine obere Fläche eingelassene Brennraummulde 14 auf. (Die Bezüge "oben", "unten" und dergleichen beziehen sich lediglich auf die relative Lage hinsichtlich der Zeichnung.) An dem Übergang zwischen der Seitenwandung 18 der Brennraummulde 14 und dem Kolbenboden 20 befindet sich eine Kante oder Lippe 16.

Die Lippe 16 weist acht unterschiedliche Abschnitte 22, 24, 26, 28, 30, 32, 34 und 36 auf. Umfangsmäßig liegt der größte Teil der Lippe 16 in den Abschnitten 22 und 30, die scharfkantig oder nahezu scharfkantig sind und einen Nominalradius von beispielsweise 0,75 mm aufweisen können, wie es in übertriebener Größe in Fig. 4 gezeigt ist. Die beiden Abschnitte 26 und 34 der Lippe 16 liegen unmittelbar über dem oberen Bereich der Kolbenbohrung 30 und können beispielsweise Nominalradien von 1,5 mm aufweisen, wie es in Fig. 3 in übertriebener Größe dargestellt ist. Die verbleibenden vier Abschnitte 24, 28, 32 und 36 der Lippe 16 sind Übergangsabschnitte, die zwischen den Abschnitten 22, 26, 30 bzw. 34 liegen. Die Radien der Übergangsabschnitte 24, 28, 32 und 36 ändern sich sanft von den Radien der scharfen oder nahezu scharfen Abschnitte 22, 30 zu den Radien der weniger scharfen Abschnitte 26, 34. Vorzugsweise ist der Kolben 10 in dem Zylinder einer Maschine derart angeordnet, das die weniger scharfen Abschnitte 26, 34 unterhalb der Ventile 38 liegen.

In den meisten Fällen brauchen sich die weniger scharfen Abschnitte 26, 34 und die Übergangsabschnitte 24, 28, 32, 36 in seitliche Richtung nicht so weit zu erstrecken wie die Bolzenbohrung 12. Dies liegt daran, daß der Kolben 10 oberhalb der seitlich äußeren Bereiche der Bolzenbohrung 12 dicker ist, und daher fertigungsmäßig den schärferen Radien der Abschnitte 22, 30 eher gewachsen ist.

Vorzugsweise wird der Kolben 10 aus einem konventionellen Material, z. B. Aluminium hergestellt, indem er in üblicher Weise erst gegossen und dann spanabhebend bearbeitet wird, um einen Kolben 10 zu erzeugen, der eine Brennraummulde 14 mit einer über ihren ganzen Umfang scharfen oder nahezu scharfen Lippe enthält. Die Lippe wird dann oberhalb der Bolzenbohrung 12 gebürstet, um die weniger scharfen Abschnitte 26, 34 und die Übergangsabschnitte 24, 28, 32, 36 zu erzeugen. Alternativ hierzu können die Lippen auch durch Fräsen, Schleifen, Gießen oder auf andere Weise hergestellt werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. Beispielsweise sind die angegebenen Abmessungen lediglich beispielhaft. Es versteht sich von selbst, daß andere Abmessungen bei anderen Kolben- oder Brennraummuldendimensionen verwendet werden können.

## Patentansprüche

1. Kolben einer Verbrennungskraftmaschine dessen Kolbenkörper einen Kolbenboden (20), eine darin eingelassene Brennraummulde (14), eine Lippe (16), die als Übergang zwischen der Brennraummmulde (14) und dem Kolbenboden dient, und eine Bolzenbohrung (12), die in den Kolbenkörper unterhalb der Brennraummulde (14) ausgebildet ist, enthält, dadurch gekennzeichnet, daß die Lippe (16) rund um den Umfang der Brennraummulde (14) unterschiedliche Radien an unterschiedlichen vorbestimmbaren Stellen aufweist, wobei die Radien der Lippe (16) in einem Abschnitt (26, 34), der über wenigstens dem zentralen Teil der Bolzenbohrung (12) liegt, weniger scharf ausgebildet ist, als in den anderen Abschnitten (22, 30, 24, 28, 32, 36) der Lippe (16).

2. Kolben nach Anspruch 1, dadurch gekennzeichnet, daß der Radius der Lippe (16) in dem oberhalb der Bolzenbohrung (12) liegenden Abschnitt (26, 34) der Lippe (16) vergleichsweise groß ist, in dem nicht über der Bolzenbohrung (12) liegenden Abschnitt (22, 30) der Lippe (16) hingegen vergleichsweise klein ist und in Bereichen, die unmittelbar an die über der Bolzenbohrung (12) liegenden Abschnitte (26, 34) anschließen, einen weichen Übergang von groß zu klein aufweist.

3. Kolben nach Anspruch 1 oder 2, dadurch gekennzeichnet, daß der scharfe oder große Radius der Lippe (16) etwa doppelt so groß ist wie der weniger scharfe oder kleine Radius der Lippe (16).

4. Kolben nach einem der Ansprüche 1 bis 3, dadurch gekennzeichnet, daß der scharfe oder kleine Radius der Lippe (16) ungefähr 0,75 mm und der weniger scharfe oder große Radius der Lippe (16) ungefähr 1,5 mm beträgt.

5. Verbrennungskraftmaschine mit wenigstens einem Zylinder, der mehrere Ventile aufweist, dadurch gekennzeichnet, daß ein Kolben (10) gemäß einem der Ansprüche 1 bis 4 von dem Zylinder aufgenommen wird.

6. Verbrennungskraftmaschine nach Anspruch 5, dadurch gekennzeichnet, daß die Abschnitte (26, 34) der Lippe (16) mit den weniger scharfen oder großen Radien so angeordnet sind, daß sie im wesentlichen unter den Ventilen (38) liegen.

7. Verfahren zur Herstellung eines Kolbens gemäß einem der Ansprüche 1 bis 6, gekennzeichnet durch
a. Gießen und mechanisches Bearbeiten eines Kolbenkörpers zur Erzeugung eines Kolbens (10) mit einer Bolzenbohrung (12) und mit einer durch eine Lippe (16) begrenzten Brennraummulde (14), wobei die Lippe (16) entlang ihres ganzen Umfangs im wesentlichen scharfkantig ausgebildet ist, und
b. Bürsten der Abschnitte (26, 34) der Lippe (16), die über der Bolzenbohrung (12) liegen, um die Lippe hier, sowie in unmittelbarer Nachbarschaft (24, 28, 32, 36) zu diesen Abschnitten stumpf zu machen, wodurch ein weicher Übergang zwischen den abgestumpften Abschnitten (26, 34) und den verbleibenden scharfen Abschnitten (22, 30) der Lippe geschaffen wird.
